# EUROPÄISCHE PATENTSCHRIFT

(11) **EP 0 691 496 B1**
(45) Veröffentlichungstag und Bekanntmachung des Hinweises auf die Patenterteilung: **30.12.1998**
(21) Anmeldenummer: 95110271.4
(22) Anmeldetag: 01.07.1995
(51) Int. Cl.: F16L 3/04, F16L 3/13, F16B 21/08

(54) **Spreizanker**
Expansion anchoring device
Dispositif d'ancrage expansible

(30) Priorität: 09.07.1994 DE 9411165 U
(43) Veröffentlichungstag der Anmeldung: 10.01.1996
(73) Patentinhaber: PANDUIT GMBH, D-61352 Bad Homburg v.d.h. (DE)
(72) Erfinder: Kittmann, Roland, Dipl.-Math., D-85293 Reichertshausen (DE); Gürtler, Alfred, D-83620 Feldkirchen-Westerham (DE)
(74) Vertreter: KEIL & SCHAAFHAUSEN Patentanwälte

(56) Entgegenhaltungen:
- DE-A- 2 031 485
- US-A- 3 776 092
- US-A- 3 909 883

## Beschreibung

Die Erfindung bezieht sich auf einen Spreizanker für die Festlegung von Kabelhaltern, Kabelbindern, Kabelschellen, Halteclips und dgl. Befestigungsmitteln in einem Montageloch eines Trägers, mit einem Ankerkopf für die Anlage auf der Vorderseite des Trägers, mit einem Ankerschaft, mit an dem Ankerschaft in einem vorzugsweise spitzen Winkel zueinander stehenden Ankerflügeln, welche sich beim Einführen in das Montageloch elastisch nachgiebig aufeinander zu falten und nach dem Hindurchtreten durch das Montageloch wieder über den Durchmesser des Montagelochs aufspreizen, um ein Herausziehen aus dem Montageloch zu verhindern, sowie mit Mitteln zum Verhindern der seitlichen Bewegung des Ankerschafts aus der Mittellage in dem Montageloch, indem die Ankerflügel rückwärtige Fortsätze für das Zusammenwirken mit dem Innenrand des Montagelochs aufweisen.

Bei einem aus der US-A-3 909 883 bekannten Spreizanker dieser Art ragen von dem Ankerschaft kopfseitig des Schwenkbereichs der Ankerflügel bzgl. des Ankerschafts diametral einander gegenüber in der Schwenkebene der Ankerflügel liegende Anschläge weg, welche die gesamte - senkrecht zu der Schwenkebene gesehene - Breite des Ankerschafts einnehmen und das seitliche Spiel des Ankerschafts in dem Montageloch begrenzen sollen. Bei Einwirkung einer Zugkraft verbunden mit einer auch nur geringen Seitenkraft auf den Spreizanker gelangt der eine der beiden Ankerflügel in das Montageloch und der Spreizanker löst sich von dem Träger. Bei einem anderen bekannten Spreizanker sind die Spreizflügel an ihren rückwärtigen freien Enden im Bereich ihrer einander zugewandten Kanten mit flachen zungenartigen Fortsätzen versehen, welche ebenfalls die gesamte - senkrecht zu der Schwenkebene gesehene - Breite des Ankerschafts und der Ankerflügel einnehmen und sich beim Aufspreizen der Ankerflügel hinter dem Montageloch an den Innenrand des Montagelochs legen, wodurch ihre Aufspreizweite begrenzt ist. Damit wirken die elastischen Rückstellkräfte der Ankerflügel in Spreizrichtung einer seitlichen Verschiebung des Ankerschaftes in dem Montageloch entgegen. Wirkt jedoch eine diese Rückstellkraft überwindende Seitenkraft verbunden mit einer auch nur geringen Zugkraft auf einen solchen Spreizanker, so gelangt auch hierbei der eine der beiden Ankerflügel in das Montageloch und der Spreizanker löst sich von dem Träger.

Aufgabe der vorliegenden Erfindung ist es, einen Spreizanker der eingangs genannten Art so zu verbessern, daß er über einen verhältnismäßig großen Durchmesserbereich von Montagelöchern, insbesondere ohne die zuvor geschilderten Nachteile des Standes der Technik, sicher montiert werden kann.

Diese Aufgabe wird erfindungsgemäß im wesentlichen dadurch gelöst, daß von dem Ankerschaft quer oder von dem Ankerkopf parallel zu dem Ankerschaft Anschläge zum Zusammenwirken mit dem Innenrand des Montagelochs wegragen und daß die Anschläge und die Fortsätze über die Breite des Ankerschafts gesehen in unterschiedlichen, sich nicht überlappenden Bereichen vorgesehen sind.

Der Erfindungsgedanke besteht also im wesentlichen darin, daß der neuartige Spreizanker nicht nur bei einem Spreizanker an sich bekannte Anschläge, sondern auch bei einem anderen Spreizanker an sich bekannte Fortsätze der Ankerflügel aufweist mit der Besonderheit, daß diese sich in ihrer Funktion nicht gegenseitig behindern, sondern je für sich ihre Funktion ausüben können, indem die Anschläge und die Fortsätze über die Breite des Ankerschafts gesehen in unterschiedlichen, sich nicht überlappenden Bereichen vorgesehen sind. Wirkt eine Zugkraft gleichzeitig mit einer Seitenkraft auf den erfundenen Spreizanker, hat die Seitenkraft zunächst die Rückstellkraft des einen Ankerflügels zu überwinden, bis der eine Anschlag an den Innenrand des Montagelochs stößt und eine weitere seitliche Bewegung des Spreizankers in dem Montageloch nicht mehr möglich ist. Bei dieser seitlichen Bewegung kann sich der gegenüberliegende Ankerflügel, welcher in der Mittellage des Ankerschafts unter einer gewissen Vorspannung mit seinem rückwärtigen Fortsatz an dem Innenrand des Montagelochs anlag, weiter aufspreizen, um die seitliche Verschiebung des Spreizankers in dem Montageloch auszugleichen. Auf diese Weise wird verhindert, daß dieser Ankerflügel - abgesehen von seinem rückwärtigen Fortsatz - in das Montageloch gelangt. Die entsprechende Wirkung tritt ein, wenn der Spreizanker in die entgegengesetzte Richtung seitlich in dem Montageloch bewegt wird.

Gemäß einer vorteilhaften Ausgestaltung der Erfindung sind zwei Anschläge bezüglich des Achsschaftes parallel zu der Mittellängsebene gesehen einander gegenüberliegend angeordnet, innerhalb welcher die Achsflügel schwenkbar sind.

Funktionstechnisch ist es von besonderem Vorteil, wenn die Anschläge beide auf einer Seite oder auf einander gegenüberliegenden Seiten der Mittellängsebene und die Fortsätze beide auf der jeweils anderen Seite der Mittellängsebene vorgesehen sind.

Insbesondere kann auch dafür Sorge getragen sein, daß die Anschläge beide auf einer Seite oder je auf einander gegenüberliegenden Seiten der von dem Spritzgußherstellungswerkzeug bestimmten Formtrennebene liegen und die Fortsätze jeweils auf der gegenüberliegenden. Auf diese Weise ist insbesondere die einteilige Herstellung des Spreizankers mit allen seinen Komponenten in Kunststoffspritztechnik auf einfache Weise möglich.

Vorzugsweise verjüngen sich die Ankerflügel relativ zu der Mittellängsebene in ankerkopfabgewandter Richtung konisch, um das Einführen des Spreizankers in das Montageloch zu erleichtern.

Dem gleichen Zweck dient es, wenn die in einem vorzugsweise spitzen Winkel zueinander stehenden Ankerflügel in eine Spitze des Ankerschafts münden.

Der Spreizanker besteht mit seinen wesentlichen Elementen Ankerkopf, Ankerschaft, Ankerflügel mit Fortsätzen und Anschläge vorzugsweise einstückig aus Kunststoff. Insbesondere Material, Bemessung und Gestaltung können so ausgewählt werden, daß die Ankerflügel gegen eine Rückstellkraft aufeinander zu faltbar sind, wenn der Spreizanker in das Montageloch eingeführt wird und daß die Ankerflügel nach dem Hindurchtreten durch das Montageloch sich hinter dem Träger wieder selbsttätig aufspreizen bis die rückwärtigen Ansätze an dem Innenrand des Montagelochs noch unter einer gewissen Vorspannung anliegen, also noch nicht ihre am weitesten gespreizte Lage einnehmen.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung.

Es zeigen:
- Fig. 1.1 und Fig. 2.1: je eine Hälfte zweier unterschiedlicher Ausgestaltungen von die Erfindung aufweisenden Spreizankern, in ein Montageloch eines Trägers montiert,
- Fig. 1.2: eine Ansicht aus der Richtung I.2 von Fig. 1.1,
- Fig. 2.2: eine Ansicht entsprechend der Richtung II.2 von Fig. 2.1,

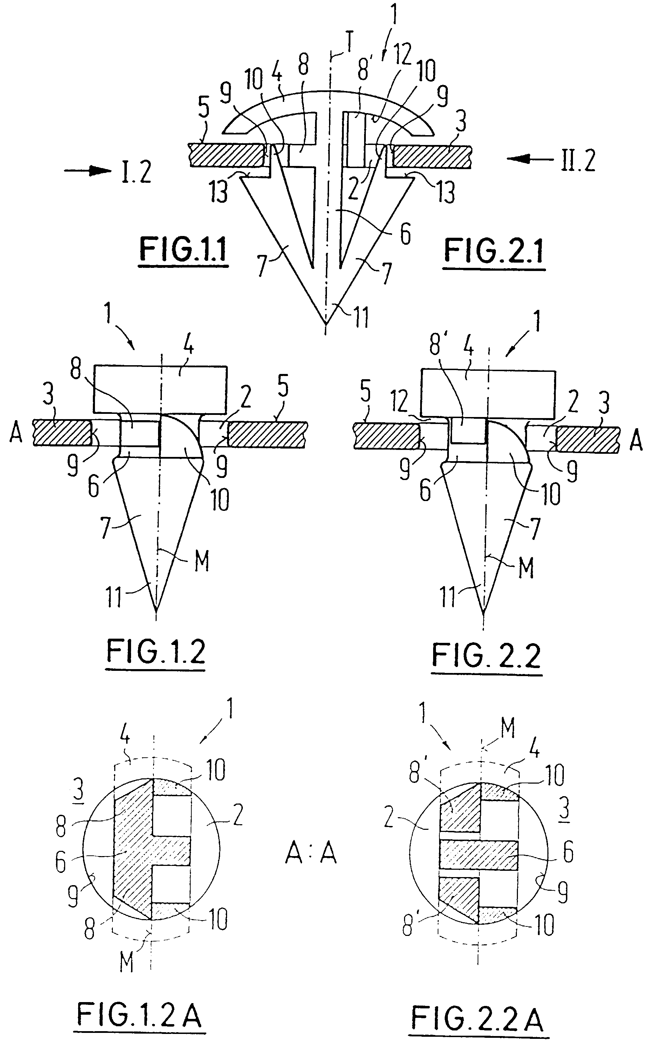

- Fig. 1.2 A: einen Schnitt in der Schnittebene A von Fig. 1.2, und
- Fig. 2.2 A: einen Schnitt entsprechend der Schnittebene A von Fig. 2.2.

Die Fig. 1.1 und 2.1 zeigen jeweils bis zur Teilungslinie T eine Hälfte zweier unterschiedlicher Ausführungsbeispiele von erfindungsgemäßen Spreizankern 1. Derartige Spreizanker 1 dienen bspw. der Festlegung von Kabelhaltern, Kabelbindern, Kabelschellen, Halteclips und dgl. Befestigungsmitteln in einem Montageloch 2 eines bspw. plattenförmigen Trägers 3. Zu diesem Zweck ist der Spreizanker 1 bspw. im Bereich seines Ankerkopfes 4 mit einem Kabelhalter-, Kabelschellen-, Halteclip- oder dgl. Befestigungsmittelabschnitt verbunden, was jedoch zeichnerisch nicht dargestellt ist. Der Spreizanker 1 besteht im wesentlichen aus einem Ankerkopf 4 und einem Ankerschaft 6, von dessen dem Ankerkopf 4 gegenüberliegenden Ende nach rückwärts unter vorzugsweise spitzem Winkel zwei in der Mittellängsebene M des Spreizankers 1 schwenkbare Ankerflügel 7 wegragen. Der Ankerkopf 4 hat jedenfalls in einer Richtung einen größeren Durchmesser als der Durchmesser des Montagelochs 2, so daß er auf der Vorderseite 5 des Trägers 3 zur Anlage kommen kann. Vor dem Einführen in das Montageloch 2 überragen die Ankerflügel 7 in ihrer äußersten Spreizlage ebenfalls den Durchmesser des Montagelochs 2. Bei einem Einführen in das Montageloch 2 falten sich dann die Ankerflügel 7 aufgrund ihrer Bemessung, Gestaltung und Materialbeschaffenheit, vorzugsweise aus Kunststoff, elastisch nachgiebig aufeinander zu; nach dem Hindurchtreten durch das Montageloch 2 spreizen sie sich jedenfalls mit ihren äußeren Sperrkanten 13 wieder über den Durchmesser des Montagelochs 2 auf, wenn der Ankerkopf 4 an der Vorderseite 5 des Trägers 3 zur Anlage kommt. Entsprechend der Erfindung tragen die Ankerflügel 7 an den einander zugewandten Kanten ihrer rückwärtigen die Sperrkanten 13 bildenden Enden flache zungenförmige Fortsätze 10, welche nach dem Hindurchstecken der Ankerflügel 7 durch das Montageloch 2 an dem Innenrand 9 des Montagelochs 2 zur Anlage kommen, während die Ankerflügel 7 noch unter einer gewissen Vorspannung stehen. Wie aus den Fig. 1.2 und 1.2 A ersichtlich, nehmen die Fortsätze 10 jedoch nur etwa die Hälte der - senkrecht zur Schwenkebene der Ankerflügel gesehen - Breite des Ankerschafts 6 auf einer Seite der Mittellängsebene M ein. Auf der jeweils anderen Seite der Mittellängsebene M steht in gleicher Höhe und auf der Höhe der Fortsätze 10 auf beiden Seiten des Ankerschafts 6 jeweils ein Anschlag 8 von dem Ankerschaft 6 ab. Aus den Fig. 1.2 und 1.2 A ist ersichtlich, daß die beiden Anschläge 8 ebenfalls nur etwa die Hälfte der Breite des Ankerschafts 6 einnehmen und auf der den Fortsätzen 10 gegenüberliegenden Seite der Mittellängsebene M angeordnet sind. Auf diese Weise sind die Funktionen der Anschläge 8 und der Fortsätze 10, obgleich sie beide in gleicher Höhe im Bereich des Montagelochs 2 zu liegen kommen, nicht beeinträchtigt; es ist eine einfache Herstellbarkeit des Spreizankers 1 im Kunststoffspritzverfahren dann gewährleistet, wenn die Anschläge 8, 8' auf einer Seite der von dem Spritzgußherstellungswerkzeug bestimmten Formtrennebene liegen und die Fortsätze 10 auf der anderen Seite. Auch eine wechselseitige Anordnung von Anschlägen 8, 8' und Fortsätzen 10 ist möglich.

Wie aus den Fig. 1.1 und 1.2 ersichtlich, münden die Ankerflügel 7 in einer Spitze 11 des Ankerschaftes 6 und sie verjüngen sich selbst konisch ausgehend von den Fortsätzen 10 bis zu der Spitze 11, so daß das Einführen des Spreizankers 1 in das Montageloch leicht bewerkstelligt werden kann.

Die in den Fig. 2.1, 2.2 und 2.2 A dargestellte Ausführungsform eines anderen erfindungsgemäßen Spreizankers 1 unterscheidet sich von dem in den Fig. 1.1, 1.2 und 1.2 A dargestellten Spreizanker 1 lediglich dadurch, daß anstelle der von dem Ankerschaft 6 seitlich der Mittellängsebene M auf einen der gegenüberliegenden Seiten von dem Ankerschaft 6 wegragenden beiden Anschlägen 8 entsprechende Anschläge 8' benachtbart dem Ankerschaft 6 von der Unterseite 12 des Ankerkopfes 4 nach unten parallel zu dem Ankerschaft 6 wegragen. Die Anschläge 8' enden kurz vor der Oberkante der Ankerflügel 7. Entsprechend den Anschlägen 8 sind auch die Anschläge 8' nur auf einer Seite oder auf wechselnden Seiten der Mittellängsebene M vorgesehen, so daß die rückwärtigen Fortsätze 10 der Ankerflügel 7 von den Anschlägen 8' in ihrer Zusammenfaltbewegung nicht beeinträchtigt werden.

Selbstverständlich sind auch Kombinationen der Anschläge 8, 8' in Anordnung, Bemessung und Gestalt denkbar; wichtig ist nur, daß die Anschläge 8, 8' bei montiertem Spreizanker 1 im Bereich des Montagelochs 2 das seitliche Bewegungsspiel des Ankerschafts 6 einzuschränken in der Lage sind, ohne die Funktion der Ankerflügel 7 beim Einführen in das Montageloch 2 zu beeinträchtigen. Bei entsprechend unrund gestaltetem Montageloch 2 können die Anschläge 8, 8' auch als Verdrehsicherung dienen.

### Bezugszeichenliste:

- 1: Spreizanker
- 2: Montageloch
- 3: Träger
- 4: Ankerkopf
- 5: Vorderseite
- 6: Ankerschaft
- 7: Ankerflügel
- 8, 8': Anschläge
- 9: Innenrand
- 10: Fortsätze
- 11: Spitze
- 12: Unterseite
- 13: Sperrkanten
- M: Mittellängsebene
- T: Teilungslinie

## Patentansprüche

1. Spreizanker für die Festlegung von Kabelhaltern, Kabelbindern, Kabelschellen, Halteclips und dgl. Befestigungsmitteln in einem Montageloch (2) eines Trägers (3), mit einem Ankerkopf (4) für die Anlage auf der Vorderseite (5) des Trägers (3), mit einem Ankerschaft (6), mit an dem Ankerschaft (6) in einem vorzugsweise spitzen Winkel zueinander stehenden Ankerflügeln (7), welche sich beim Einführen in das Montageloch (2) elastisch nachgiebig aufeinander zu falten und nach dem Hindurchtreten durch das Montageloch (2) wieder über den Durchmesser des Montagelochs (2) aufspreizen, um ein Herausziehen aus dem Montageloch zu verhindern, sowie mit Mitteln zum Verhindern der seitlichen Bewegung des Ankerschafts (6) aus der Mittellage in dem Montageloch (2), indem die Ankerflügel (7) rückwärtige Fortsätze (10) für das Zusammenwirken mit dem Innenrand (9) des Montagelochs (2) aufweisen, **dadurch gekennzeichnet**, daß von dem Ankerschaft (6) quer oder von dem Ankerkopf (4) parallel zu dem Ankerschaft (6) Anschläge (8, 8') zum Zusammenwirken mit dem Innenrand (9) des Montagelochs (2) wegragen und daß die Anschläge (8, 8') und die Fortsätze (10) über die Breite des Ankerschafts (6) gesehen in unterschiedlichen, sich nicht überlappenden Bereichen vorgesehen sind.

2. Spreizanker nach Anspruch 1, **dadurch gekennzeichnet**, daß die Anschläge (8, 8') bezüglich des Ankerschafts (6) parallel zu der Mittellängsebene (M) gesehen einander gegenüberliegen, innerhalb welcher die Ankerflügel (7) schwenkbar sind.

3. Spreizanker nach Anspruch 1 oder 2, **dadurch gekennzeichnet**, daß die Anschläge (8, 8') beide auf einer Seite oder auf einander gegenüberliegenden Seiten der Mittellängsebene (M) oder der von dem Spritzgußherstellungswerkzeug bestimmten Formtrennebene und die Fortsätze (10) beide auf der anderen Seite oder auf einander gegenüberliegenden Seiten der Mittellängsebene (M) oder der von dem Spritzgußherstellungswerkzeug bestimmten Formtrennebene vorgesehen sind.

4. Spreizanker nach einem der Ansprüche 1 bis 3, **dadurch gekennzeichnet**, daß sich die Ankerflügel (7) relativ zu der Mittellängsebene (M) in ankerkopfabgewandter Richtung konisch verjüngen.

5. Spreizanker nach einem der Ansprüche 1 bis 4, **dadurch gekennzeichnet**, daß die Ankerflügel (7) in eine Spitze (11) des Ankerschafts (6) münden.

6. Spreizanker nach einem der Ansprüche 1 bis 5, **dadurch gekennzeichnet**, daß Ankerkopf (4), Ankerschaft (6), Ankerflügel (7) mit Fortsätzen (10) und Anschläge (8, 8') einstückig aus Kunststoff bestehen.

## Claims

1. Expansion anchor for the connection of cable holders, cable binders, cable collars, fastening clips and the like fastening means in a mounting hole (2) of a carrier (3), comprising an anchor head (4) for abutment at the front side (5) of the carrier (3), an anchor shaft (6), fins (7) being provided at the anchor shaft (6) in a preferably pointed angle towards each other, which, upon introduction into the mounting hole (2), are elastically deflectable towards each other and, having passed through the mounting hole (2), again expand above the diameter of the mounting hole (2) to avoid removal from the mounting hole, as well as means to prevent lateral movement of the anchor shaft (6) from the medium position in the mounting hole (2), by the fins (7) having rear projections (10) for cooperation with the inner edge (9) of the mounting hole (2), **characterized in that** stopper members (8, 8') are pointing away from the anchor shaft (6) laterally or from the anchor head (4) parallel to the anchor shaft (6) for cooperation with the inner edge (9) of the mounting hole (2) and that the stopper members (8, 8') and the projections (10) are provided in different areas not overlapping each other relative to the width of the anchor shaft (6).

2. Expansion anchor according to Claim 1, **characterized in that** the stopper members (8, 8') are facing each other with respect to the amchor shaft seen parallel to the central longitudinal plane (M), within which the fins (7) are movable.

3. Expansion anchor according to Claims 1 or 2, **characterized in that** the stopper members (8, 8') are provided both on one side or on two opposing sides of the central longitudinal plane (M) or of the mould separation plane defined by the injection moulding manufacturing tool and the rear projections (10) are provided both on the other side or on opposing sides of the center longitudianl plane (M) or of the mould separation plane defined by the injection moulding manufacturing tool.

4. Expansion anchor according to one of Claims 1 to 3, **characterized in that** the fins (7) conically taper relative to the central longitudinal plane (M) in direction away from the anchor head.

5. Expansion anchor according to one of claims 1 to 4, **characterized in that** the fins (7) lead into a tip (11) of the anchor shaft (6).

6. Expansion anchor according to one of Claims 1 to 5, **characterized in that** anchor head (4), anchor shaft (6), fins (7) with projections (10) and stopper members (8, 8') consist in one piece of plastic material.

## Revendications

1. Dispositif d'ancrage expansible pour la fixation de porte-câbles, de colliers de serrage de câbles, de clips de maintien et de moyens de fixation similaires dans un trou de montage (2) d'un support (3), muni d'une tête d'ancrage (4) pour l'application sur le côté avant (5) du support (3), d'une verge d'ancrage (6), d'ailettes d'ancrage (7) situées de préférence en angle aigu l'une par rapport à l'autre sur la verge d'ancrage (6), lesquelles ailettes d'ancrage se replient l'une sur l'autre de manière élastique lors de leur introduction dans le trou de montage (2) et se déplient à nouveau au-dessus du diamètre du trou de montage (2) après avoir traversé le trou de montage (2) afin d'empêcher un retrait du trou de montage, et muni de moyens empêchant le mouvement latéral de décentrage de la verge d'ancrage (6) dans le trou de montage (2) du fait que les ailettes d'ancrage (7) présentent des prolongements (10) arrière agissant avec le bord intérieur (9) du trou de montage (2), **caractérisé en ce que** des butoirs (8, 8') dépassent de la verge d'ancrage (6) de manière transversale ou de la tête d'ancrage (4) de manière parallèle à la verge d'ancrage (6) pour agir avec le bord intérieur (9) du trou de montage (2) et que les butoirs (8, 8') et les prolongements (10), vus sur la largeur de la verge d'ancrage (6), sont prévus dans des parties différentes ne se recouvrant pas.

2. Dispositif d'ancrage expansible selon la revendication 1, **caractérisé en ce que** les butoirs (8, 8'), vus parallèlement au plan longitudinal médian (M) par rapport à la verge d'ancrage (6), sont opposés l'un à l'autre, les ailettes d'ancrage (7) étant pivotantes dans ce plan longitudinal médian.

3. Dispositif d'ancrage expansible selon la revendication 1 ou 2, **caractérisé en ce que** les butoirs (8, 8') sont prévus tous les deux sur un côté ou sur des côtés du plan longitudinal médian (M) opposés l'un à l'autre, ou du plan de séparation du moule défini par l'outil de fabrication par injection, et que les prolongements (10) sont prévus tous les deux sur l'autre côté ou sur des côtés du plan longitudinal médian (M) opposés l'un à l'autre ou du plan de séparation du moule défini par l'outil de fabrication par injection.

4. Dispositif d'ancrage expansible selon l'une des revendications 1 à 3, **caractérisé en ce que** les ailettes d'ancrage (7) diminuent de manière conique et relativement par rapport au plan longitudinal médian (M) dans le sens opposé à la tête d'ancrage.

5. Dispositif d'ancrage selon l'une des revendications 1 à 4, **caractérisé en ce que** les ailettes d'ancrage (7) débouchent dans une pointe (11) de la verge d'ancrage (6).

6. Dispositif d'ancrage expansible selon l'une des revendications 1 à 5, **caractérisé en ce que** la tête d'ancrage (4), la verge d'ancrage (6), les ailettes d'ancrage (7) avec les prolongements (10) et les butoirs (8, 8') sont constituées d'une seule pièce en plastique.
